# EUROPÄISCHE PATENTSCHRIFT

(11) **EP 3 256 419 B1**
(45) Veröffentlichungstag und Bekanntmachung des Hinweises auf die Patenterteilung: **10.04.2019**
(21) Anmeldenummer: 16714214.0
(22) Anmeldetag: 10.02.2016
(51) Int. Cl.: F17C 1/00, H01R 13/00, B67D 7/32

(54) **VORRICHTUNG UND VERFAHREN ZUR ÜBERFÜHRUNG VON KRYOGENEN FLUIDEN**
DEVICE AND METHOD FOR TRANSFERRING CRYOGENIC FLUIDS
DISPOSITIF ET PROCÉDÉ DE TRANSFERT DE FLUIDES CRYOGÉNIQUES

(30) Priorität: 10.02.2015 DE 102015001665
(43) Veröffentlichungstag der Anmeldung: 20.12.2017
(73) Patentinhaber: Kennett, Richard Alan, 82152 Planegg (DE)
(72) Erfinder: Kennett, Richard Alan, 82152 Planegg (DE)
(74) Vertreter: Aurigium Leischner & Luthe
(86) Internationale Anmeldenummer: PCT/DE2016/000046
(87) Internationale Veröffentlichungsnummer: WO 2016/127972

(56) Entgegenhaltungen:
- DE-A1-102004 033 567
- DE-C1- 10 055 104
- US-A- 5 343 906
- US-A- 5 810 048
- US-A- 6 125 871
- US-B1- 6 202 710

## Beschreibung

Die Erfindung betrifft eine Vorrichtung zur Überführung von entflammbaren, gefährlichen und/oder kryogenen Fluiden, umfassend einen ersten Kupplungsteil und einen zweiten Kupplungsteil, welcher einen Verbindungs- und Verschlussmechanismus aufweist, um eine Verbindung zum ersten Kupplungsteil herzustellen. Weiterhin wird ein Verfahren zum Betreiben der Vorrichtung zur Überführung von entflammbaren, gefährlichen und/oder kryogenen Fluiden in eine oder aus einer mobilen, transportablen oder stationären Speichereinrichtung vorgestellt.

Vorrichtungen und Verfahren zum Überführen von kryogenen Fluiden sind aus dem Stand der Technik bereits bekannt. So beschreiben beispielsweise US 5 429 155 und WO 03/095883 Kupplungen, die geeignet sind um kryogene Fluide, beispielsweise verflüssigtes Erdgas, Methan, Luft, Sauerstoff oder Wasserstoff, von einer stationären Speichereinrichtung in eine mobile Speichereinrichtung, beispielsweise einen Fahrzeugtank zu überführen.

Die DE 100 55 104 C1 offenbart eine Vorrichtung zum Befüllen eines Tanks mit einem zündfähigen Medium aus einem Vorratsbehälter. Die Vorrichtung weist ein vorratsbehälterseitiges Zuführmittel und ein tankseitiges Aufnahmemittel zur Einleitung des Mediums in den Tank auf. Es ist ein Potentialausgleichsmittel zum Ausgleichen eines elektrischen Potentials zwischen Vorratsbehälter und Tank vorgesehen, wobei ein Verschlussmittel erst nach dem ordnungsgemäßen Anschluss des Potentialausgleichsmittels freigebbar ist. Die DE 10 2004 033567 A1 offenbart ein Verbindungssystem zur Durchführung von elektrischer Leistung und zumindest einem Fluid durch eine Wandung hindurch zur Versorgung eines Verbrauchers mittels eines Versorgungsmoduls, wobei das Versorgungsmodul in dem Bereich einer ersten Seite und der Verbraucher in dem Bereich einer zweiten Seite der Wandung liegt, mit zumindest einem in der Wandung angeordneten Steckkontakt und einem dem Steckkontakt zugeordneten, an dem Versorgungsmodul angeordneten Buchsenkontakt. Die US 5 810 048 A offenbart ein Dichtmittel zwischen zwei Koppelteilen. Die US 6 125 871 A offenbart eine Anordnung zum Überführen chemischer Fluide. Die Anordnung weist zwei miteinander verbindbare Stecker auf.

Wenn die Stecker miteinander verbunden sind, kann eine Reinigungsflüssigkeit über einen Spüleingang einer Kammer eines der Stecker eingeleitet und über einen Spülausgang der Kammer ausgeleitet werden. Die US 5 343 906 A offenbart eine Tankeinrichtung für ein Fahrzeug, die ferner eine optische Übertragungseinrichtung aufweist. Die US 6 202 710 B1 befasst sich mit einem Gerät zur Wiederbetankung eines Fahrzeugs.

Dabei muss beachtet werden, dass um einen Ladungsausgleich zwischen den beiden Speichereinrichtungen, beziehungsweise dem Fahrzeug herzustellen eine separate Erdung, vor allem des Fahrzeugs, vorgenommen werden muss. Dies erfolgt in der Regel dadurch, dass manuell ein Erdungskabel an einem Metallteil des Fahrzeugs angebracht wird, bevor die Tankkupplung mit dem Tank verbunden wird.

Zudem besteht die Gefahr, insbesondere bei kryogenen Fluiden, dass Verunreinigungen, auf den Kontaktflächen der Kupplungen eine vollständige Abdichtung verhindern. Diese müssen vor der Betankung manuell entfernt werden. Hierzu wird in der Regel getrocknete Druckluft oder Stickstoff verwendet. Bei einer unvollständigen Abdichtung besteht nicht nur die Gefahr eines Austritts des Gases, sondern vor allem, dass Feuchtigkeit oder Sauerstoff eintritt und es so entweder zu einer Vereisung des Ventils oder zur Bildung von explosiven Gemischen kommen kann. Bei einer Vereisung des Ventils kann zudem die Abdichtung beschädigt werden, wenn es zu einer zu schnellen Trennung der Kupplung kommt.

Da sowohl die Erdung als auch die Reinigung vor der Befestigung der Tankkupplung manuell durchgeführt werden müssen, besteht das Risiko, dass diese Schritte vergessen werden oder unsachgemäß ausgeführt werden.

Aufgabe der vorliegenden Erfindung ist es die Überführung von entflammbaren, gefährlichen und/oder kryogenen Fluiden in eine oder aus einer mobilen, transportablen oder stationären Speichereinrichtung, durch in Verbindung bringen zweier Kupplungsteile, so zu ermöglichen, dass Fehlerquellen die zu Unfällen und Schäden führen vermieden werden.

Vorrichtungsseitig wird diese Aufgabe, dadurch gelöst, dass ein zweiter Kupplungsteil mindestens eine Kontaktfläche aufweist, die mit dem ersten Kupplungsteil derart verbindbar ist, dass ein Ladungsausgleich herstellbar ist.

Vorzugsweise ist die Vorrichtung so ausgestaltet, dass mindestens eine Kontaktfläche, insbesondere 3 Kontaktflächen, auf dem zweiten Kupplungsteil, so ausgestaltet ist, dass sie hervorsteht, insbesondere als Zylinder oder Halbkugel und dass, das erste Kupplungsteil entsprechende Vertiefungen aufweist. So ist gewährleistet, dass der erste Kontakt beim Verbinden der beiden Kupplungsteile an diesen Kontaktflächen entsteht und ein direkter Ladungsausgleich möglich ist. Gemäß einer Weiterbildung des Erfindungsgedankens, kann aber auch der erste Kupplungsteil vorstehende Kontaktflächen aufweisen und der zweite Kupplungsteil die entsprechenden Vertiefungen. Ebenso ist es denkbar, dass die hervorstehenden Kontaktflächen beweglich ausgeführt sind, so dass insbesondere hervorstehende Kontaktflächen auf dem zweiten Kupplungsteil nach dem Erstkontakt mit dem ersten Kupplungsteil durch das vollständige Verbinden beider Teile zurückgedrückt werden. Nach dem Ende des Übertragungsvorgangs und dem lösen der beiden Kupplungsteile bewegen sich die Kontaktflächen wieder in den Ausgangszustand zurück, so dass sie gegenüber den anderen Flächen, insbesondere der Dichtflächen, auf dem zweiten Kupplungsteil hervorstehen.

Da die Kontaktflächen einer Verschleißerscheinung unterliegen ist die Vorrichtung so ausgeführt, dass die Kontaktflächen ausgetauscht werden können, ohne die gesamte Kupplung austauschen zu müssen.

Die Vorrichtung gemäß Anspruchs 1 weist am zweiten Kupplungsteil zusätzlich mindestens eine Öffnung auf, die mit einer Speichereinrichtung für Gase, insbesondere Druckluft oder Stickstoff, in Verbindung steht. Bevorzugt sind die Druckluft und der Stickstoff getrocknet. Alternativ kann jedoch die Öffnung (oder mehrere Öffnungen) auch am ersten Kupplungsteil angebracht werden. Dies ist davon abhängig, an welcher Vorrichtung einfacher die notwendige Gasversorgung realisiert werden kann. Der zweite Kupplungsteil kann einen Kanal, der parallel zum Kanal in dem das zu übertragende Fluid geführt wird, aufweisen, um die mindestens eine Öffnung mit der Speichereinrichtung für Gase zu verbinden. So kann die Vorrichtung kompakter realisiert werden. Denkbar ist auch eine Rohr in Rohr Ausführung, so dass die Öffnung einen Ringspalt bildet, aus der der Gasstrom austreten kann.

Vorteilhafterweise weist die Vorrichtung am zweiten Kupplungsteil zusätzlich mindestens eine Vorrichtung zur digitalen Übertragung von Daten, insbesondere einer kontaktlosen Übertragung, auf. Diese Vorrichtung zur digitalen Übertragung kann insbesondere als Chip ausgeführt sein. Die digitale Übertragung kann insbesondere über Infrarot, Bluetooth, Near Field Communication (NFC) oder andere Übertragungsmethoden gewährleistet werden. Am oder in Verbindung mit dem ersten Kupplungsteil befindet sich eine weitere Vorrichtung zur digitalen Übertragung von Daten, insbesondere einer kontaktlosen Übertragung, die mit der Datenübertragungsvorrichtung des zweiten Kupplungsteils in Verbindung tritt.

Verfahrensseitig gemäß Anspruch 8 wird die Aufgabe dadurch gelöst, dass der zweite Kupplungsteil, so mit dem ersten Kupplungsteil, in Kontakt gebracht wird, dass sich zuerst die Kontaktflächen berühren um einen Ladungsausgleich herzustellen, bevor der Verschlussmechanismus beide Teile miteinander verbindet und die Überführung der Fluide beginnt. Durch den integrierten Ladungsausgleich bzw. die integrierte Erdung kann der früher separat notwendige Verfahrensschritt, beim Überführen von Fluiden, durch den Bediener der Vorrichtung nicht mehr vergessen oder unsachgemäß ausgeführt werden. So werden Gefahrenquellen vermieden.

Die Verbindungsflächen beider Kupplungsteile werden durch einen Gasstrom, insbesondere durch einen Druckluft-oder Stickstoffstrom, gereinigt, bevor eine Berührung der beiden Kupplungsteile stattfindet. So entsteht eine saubere Kontaktfläche, insbesondere bei den Verbindungsstutzen der Leitungsverbindungen für das zu überführende Fluid, die bündig abschließt und abgedichtet werden kann. Leckagen werden so vermieden. Es können weder Fluide austreten, so dass keine wirtschaftlichen Verluste, aber vor allem auch keine Gefährdung der Umwelt entstehen noch können Fremdstoffe in die Kupplung hineingelangen. Durch die Vermeidung von Fremdstoffen, beispielsweise Feuchtigkeit oder Feststoffe wie Staub wird vor allem bei kryogenen und/oder komprimierten Fluiden die Gefahr des Festfrierens der beiden Kupplungsteile vermieden. Besonders durch die Verwendung von trockenen Inertgasen, wie beispielsweise Stickstoff, werden die Kupplungsteile gleichzeitig inertisiert und die Entstehung von explosiven Gemischen mit dem zu überführenden Fluid verhindert.

Es ist ebenfalls denkbar, dass der Gasstrom auch nach Beendigung des Übertragungsvorgangs, während und nach dem Trennvorgang der Kupplungsteile aktiv ist, so dass auch hier ein Reinigungseffekt der Kontaktflächen eintritt und gegebenenfalls austretendes zu übertragendes Fluid unmittelbar durch inerte Gase verdünnt wird.

Die Vorrichtung ist bei der Verwendung von gasförmigem Stickstoff beispielsweise so ausgelegt, dass Temperaturen zwischen -196 und +60 °C, Drücke von 0,1 bis 10 bar oder mehr und Volumenströme von 0,1 bis 1000 l/min oder mehr realisiert werden können. Wenn keine integrierte Reinigung verwendet wird können Temperaturen zwischen -263 und +60 °C, Drücke von 0,1 bis 1000 bar oder mehr und Volumenströme von 0,1 bis 10000 l/min oder mehr realisiert werden

Vorteilhafterweise wird das Verfahren so ausgeführt, dass Absperrventile, welche den Austritt von Fluiden aus den getrennten Kupplungsteilen verhindern, erst geöffnet werden können oder automatisch öffnen, wenn der Verschlussmechanismus der Kupplungsteile fest ist und Ladungsausgleich hergestellt ist.

In einer bevorzugten Ausführungsform gewährleistet eine digitale Datenübertragung zwischen dem zweiten Kupplungsteil und der Speichereinrichtung, dass vor dem Start des Übertragungsvorgangs der Ladungsausgleich hergestellt ist und erst dann Absperrventile, welche den Austritt von Fluiden aus den getrennten Kupplungsteilen verhindern, geöffnet werden können oder automatisch öffnen. Dies bietet einen Sicherheitsvorteil dahingehend, dass der Ladungsausgleich immer kontrolliert wird.

Die digitale Datenübertragung bietet zudem weitere Überwachungs- und Sicherheitseinrichtungen. So kann eine Identifizierung der Speichereinrichtung realisiert werden. Es kann gewährleistet werden, dass die Speichereinrichtung für das zu übertragende Fluid geeignet und/oder berechtigt ist und insbesondere zur Berechnung des Inhalts und der Füllmenge notwendige Daten wie Druck und Temperatur übertragen werden. Bei zu starken Veränderung von Druck oder Temperatur in der Speichereinrichtung kann die Übertragung des Fluides automatisch unterbrochen werden oder ein Alarmsignal gegeben werden. Zudem können Daten zur Qualität des Fluides, insbesondere des Kraftstoffes ausgetauscht werden.

Die Vorrichtung und das Verfahren werden vorteilhafterweise bei der Überführung von entflammbaren, gefährlichen und/oder kryogenen Fluide zwischen mobilen, transportablen oder stationären Speichereinrichtungen, die mit Wasserstoff, Stickstoff, methanhaltigem Gas, insbesondere Erdgas oder Biogas, oder Sauerstoff befüllt werden, verwendet. Der erste Kupplungsteil ist dabei beispielsweise an der zu befüllenden Speichereinrichtung, beispielsweise dem Fahrzeugtank oder dem Speichertank einer Tankstelle angebracht. Der zweite Kupplungsteil befindet sich dementsprechend vorzugsweise am Vorlagenbehälter, beispielsweise an der Speichereinrichtung der Produktionsanlage oder dem Tankfahrzeug, welches die Tankstellen beliefert. Es versteht sich, dass Speichereinrichtungen auch bei maritimen Fahrzeugen oder Luftfahrzeugen mit der erfindungsgemäßen Vorrichtung ausgestattet sein können.

Die Vorteile der Erfindung liegen vor allem darin, dass durch die direkte Integration des Ladungsausgleiches und der Reinigung der Kontaktflächen innerhalb der Kupplungsvorrichtung die Gefahr von Fehlern beim Tankprozess vermindert wird. Zudem wird der Tankprozess beschleunigt, da weniger Arbeitsschritte auszuführen sind. Die digitale Datenübertragung ermöglicht zudem eine Identifizierung der Speichereinrichtung und eine Kompatibilitätsprüfung zwischen Speichereinrichtung und zu überführendem Medium. So kann vermieden werden, dass falsche Fluide in falsche Speichereinrichtungen gefüllt werden und so gefährliche Mischungen entstehen oder Verluste durch verunreinigte Medien, welche aufwändig entsorgt werden müssen.

Die Vorrichtung kann angewendet werden bei der Überführung von flüssigen, komprimierten und/oder kryogenen Fluiden, wie Erdgas (LNG), Wasserstoff, Stickstoff, Argon, Sauerstoff, Biogas oder Gasmischungen.

Im Folgenden ist die Erfindung anhand eines Ausführungsbeispiels in Figur 1 bis 3 schematisch dargestellt und wird näher erläutert.
- Figur 1: zeigt schematisch die getrennten Kupplungsteile
- Figur 2: zeigt schematisch den ersten Schritt der Verbindung der Kupplungsteile
- Figur 3: zeigt schematisch die verbundenen Kupplungsteile

In den Figuren sind einander entsprechende Elemente mit identischen Bezugszeichen gekennzeichnet und werden der Übersichtlichkeit halber nicht in sämtlichen Fällen erneut erläutert.

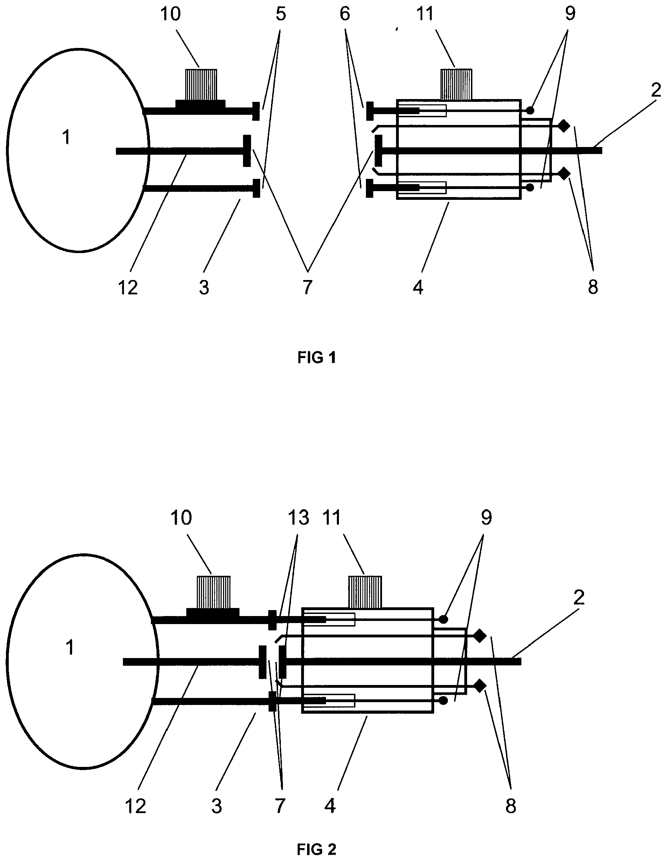

Figur 1 zeigt ein erstes Kupplungsteil 3 welches mit einer Speichereinrichtung 1 in Verbindung steht. Das zweite Kupplungsteil 4 steht über eine Leitungsverbindung für ein zu überführendes Medium 2 in Verbindung mit einer nicht gezeigten Speichereinrichtung oder einer Produktionsanlage. Das erste Kupplungsteil 3 ist in Figur 1 von dem zweiten Kupplungsteil getrennt, wie es zu Beginn eines Tankvorgangs üblich ist. Das erste Kupplungsteil 3 weist Kontaktflächen 5, hier beispielhaft gezeigt als zwei Scheiben, auf, welche gegenüber dem Verbindungsstutzen für die Leitungsverbindungen des zu überführenden Mediums 7, hervorstehen. Der Verbindungsstutzen des ersten Kupplungsteiles steht in Verbindung mit der Leitungsverbindung für ein zu überführendes Medium 12. Die Leitungsverbindung 12 steht in direktem Kontakt mit der Speichereinrichtung 1. In dem hier gezeigten Ausführungsbeispiel weist der erste Kupplungsteil zusätzlich eine Datenübertragungsvorrichtung 10 auf.

Der zweite Kupplungsteil 4 weist zwei Kontaktflächen 6 auf, die dem Ladungsausgleich dienen und so angeordnet sind, dass sie mit den Kontaktflächen 5 des ersten Kupplungsteils passgenau verbunden werden können. Die Kontaktflächen 6 stehen über eine Leitungsverbindung mit Anschlüssen 9 in Verbindung, welche wiederum eine Erdung und die Ableitung etwaiger elektrischer Ladungen. ermöglichen, was hier nicht genauer dargestellt ist. Die Kontaktflächen 6 stehen wiederum gegenüber dem Verbindungsstutzen 7 der Leitungsverbindung eines zu überführenden Mediums hervor. Das hier vorgestellte Ausführungsbeispiel weist zusätzlich zwei Leitungsverbindungen 8 auf, welche jeweils eine Öffnung in der Nähe des Verbindungsstutzens 7 aufweisen und mit einer nicht dargestellten Speichereinrichtung eines Gases in Verbindung stehen. Über die Öffnungen kann ein Gasstrom ausströmen, durch den die Kontakt- und/oder Dichtflächen der Verbindungsstutzen 7 gereinigt werden. In diesem Fall sind die Leitungsverbindungen 8 parallel zu der Leitungsverbindung 2 des zu überführenden Mediums ausgeführt. Es sind jedoch auch andere Anordnungen denkbar. Der zweite Kupplungsteil zweist zudem eine Vorrichtung zur Datenübertragung 11 auf, welche mit der Datenübertragungsvorrichtung 10 des ersten Kupplungsteils in Verbindung steht. Die Daten werden hier insbesondere kontaktlos übertragen. Es ist denkbar, dass die Datenübertragungseinheit 10 als Geber fungiert und 11 als Nehmer. Insbesondere bei einer kontaktlosen Datenübertragung kann die Datenübertragungseinheit 10 auch am Speichertank 1 oder in der Nähe des ersten Kupplungsteiles angebracht sein.

Figur 2 zeigt den ersten Schritt der Verbindung von Kupplungsteil 3 und 4. Die Kontaktflächen 5 und 6 sind in Kontakt gebracht worden und bilden die verbundene Kontaktfläche 13. Nun ist ein Ladungsausgleich zwischen dem Speichertank 1 und dem ersten Kupplungsteil 3 sowie dem zweiten Kupplungsteil 4 und einer daran angeschlossenen nicht gezeigten Speichereinrichtung möglich. Durch eine Datenübertragung zwischen den Datenübertragungsvorrichtungen 10 und 11 ist es möglich, den Erfolg des Ladungsausgleichs zu überprüfen. Wenn nötig kann die Signalisierung des erfolgreichen oder auch des fehlgeschlagenen Ladungsausgleichs beispielsweise optisch oder akustisch erfolgen. Es ist ebenfalls denkbar, dass eine Übertragung eines Fluides erst möglich ist, wenn der Ladungsausgleich erfolgreich war, insbesondere durch eine automatische Steuerung der Absperrventile. In Figur 2 ist ebenso dargestellt, dass die Öffnungen der Leitungsverbindung 8 auf die beiden Verbindungsstutzen 7 ausgerichtete sind, so dass durch einen austretenden Gasstrom eine Reinigung der Flächen erfolgt. Es sind jedoch auch andere Ausführungsformen der Öffnungen möglich, insbesondere als Düsen oder Ringspalt.

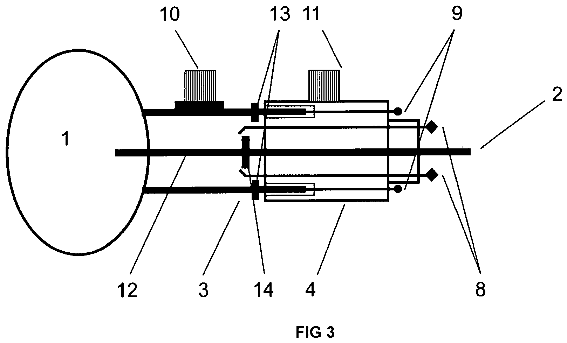

Figur 3 zeigt die verbundenen Kupplungsteile. Ein Verschließ- und Verbindungsmechanismus ist nicht dargestellt. Denkbar sind Klammern, Drehverbindungen oder form- und kraftschlüssige Verbindungen.

In Figur 3 sind die beiden Verbindungsstutzen 7 so verbunden, dass eine Einheit 14 entstanden ist. Diese wird abgedichtete, so dass keine Fluid austreten kann, aber auch keine Verunreinigungen aus der Umgebung eintreten können. Gezeigt ist zudem, dass durch das komplette verbinden der Kupplungsteile die Kontaktflächen 6 des zweiten Kupplungsteils 4 in eine dafür vorgesehene Öffnung zurückgedrückt werden und nun nicht mehr gegenüber dem Verbindungsstutzen hervorstehen. Nach dem Trennen der Kupplungsteile bewegen sich die Kontaktflächen zurück in Ausgangsposition. Dies kann beispielsweise durch eine Rückstellfeder geschehen. Da die Kontaktflächen 5 und 6 durch das Verbinden und bei 6 durch die Bewegung einem Verschleiß ausgesetzt sind können diese Teile separat ausgetauscht werden. Denkbar ist zudem auch, dass nicht die Kontaktflächen 6 sondern die Kontaktflächen 5 auf dem ersten Kupplungsteil 3 beweglich ausgestaltet sind.

**Liste der Bezugszeichen**

| | |
|---|---|
| 1 | Speichereinrichtung |
| 2 | Leitungsverbindung für zu überführendes Medium im zweiten Kupplungsteil |
| 3 | Erstes Kupplungsteil |
| 4 | Zweites Kupplungsteil |
| 5 | Kontaktflächen auf dem ersten Kupplungsteil |
| 6 | Kontaktflächen auf dem zweiten Kupplungsteil |
| 7 | Verbindungsstutzen für Leitungsverbindungen des zu überführenden Fluid |
| 8 | Leitungsverbindungen mit Öffnungen für Gasstrom |
| 9 | Anschlüsse zum Ladungsausgleich |
| 10 | Datenübertragungsvorrichtung auf dem ersten Kupplungsteil |
| 11 | Datenübertragungsvorrichtung auf dem zweiten Kupplungsteil |
| 12 | Leitungsverbindung für zu überführendes Medium mit einer Speichereinrichtung im ersten Kupplungsteil |
| 13 | Verbundene Kontaktflächen 5 und 6 |
| 14 | Verbundene Verbindungsstutzen 7 |

## Patentansprüche

1. **Vorrichtung** zur Überführung von flüssigen, komprimierten und/oder kryogenen Fluiden, wie Erdgas (LNG), Wasserstoff, Stickstoff, Argon, Sauerstoff, Biogas oder Gasmischungen, umfassend:
einen ersten Kupplungsteil (3) und
einen zweiten Kupplungsteil (4), wobei der zweite Kupplungsteil (4) einen Verbindungs- und Verschlussmechanismus aufweist, um eine Verbindung zum ersten Kupplungsteil (3) herzustellen, wobei
der erste Kupplungsteil (3) eine Leitungsverbindung (12) für die zu überführenden Fluide aufweist, wobei die Leitungsverbindung (12) einen Verbindungsstutzen (7) aufweist, wobei
der zweite Kupplungsteil (4) eine Leitungsverbindung (2) für die zu überführenden Fluide aufweist, wobei die Leitungsverbindung (2) einen Verbindungsstutzen (7) aufweist, wobei
der Verbindungsstutzen (7) des zweiten Kupplungsteil (4) mit dem Verbindungsstutzen (7) des ersten Kupplungsteils (3) verbindbar ist, und wobei
der zweite Kupplungsteil (4) mindestens eine Kontaktfläche (6) und der erste Kupplungsteil (3) eine Kontaktfläche (5) aufweisen, wobei die Kontaktflächen zum Herstellen eines Ladungsausgleichs zwischen den Kupplungsteilen (3, 4) verbindbar sind,
**dadurch gekennzeichnet, dass**
der zweite Kupplungsteil (4) zusätzlich zwei Leitungsverbindungen (8) aufweist, die mit einer Speichereinrichtung für Gase, insbesondere Druckluft oder Stickstoff, verbindbar sind, und dass jede der Leitungsverbindungen (8) eine Öffnung in der Nähe des Verbindungsstutzens (7) des zweiten Kupplungsteils (4) aufweist, wobei über die Öffnungen ein Gasstrom ausströmen kann, durch den die Verbindungsflächen (5, 6, 7) beider Kupplungsteile (3, 4) gereinigt werden können.

2. **Vorrichtung** nach Anspruch 1, **dadurch gekennzeichnet, dass** mindestens eine Kontaktfläche (6), insbesondere 3 Kontaktflächen, auf dem zweiten Kupplungsteil (4) so ausgestaltet ist, dass sie hervorsteht, insbesondere als Zylinder oder Halbkugel und dass das erste Kupplungsteil (3) entsprechende Vertiefungen aufweist.

3. **Vorrichtung** nach Anspruch 1 oder 2, **dadurch gekennzeichnet, dass** die Leitungsverbindungen (8) mit der Speichereinrichtung für inerte Gase, insbesondere getrocknete Druckluft oder Stickstoff, in Verbindung steht.

4. **Vorrichtung** nach einem der vorangegangenen Ansprüche, **dadurch gekennzeichnet, dass** die mindestens eine Öffnung der Leitungsverbindungen (8) auf die Verbindungsstutzen (7) ausgerichtet ist.

5. **Vorrichtung** nach einem der vorangegangenen Ansprüche, **dadurch gekennzeichnet, dass** die mindestens eine Öffnung der Leitungsverbindungen (8) als Düse oder Ringspalt ausgeformt ist.

6. **Vorrichtung** nach einem der vorangegangenen Ansprüche, **dadurch gekennzeichnet, dass** der zweite Kupplungsteil (4) zusätzlich mindestens eine Vorrichtung zur digitalen Übertragung von Daten (11), insbesondere einer kontaktlosen Übertragung, aufweist.

7. **Vorrichtung** nach Anspruch 6, **durch gekennzeichnet, dass** eine mit der Vorrichtung zur digitalen Übertragung von Daten (11) verbindbare Datenübertragungseinheit (10) zur digitalen Übertragung der Daten am ersten Kupplungsteil (3), an der Speichereinrichtung (1) oder in der Nähe des ersten Kupplungsteils (3) angebracht ist.

8. **Verfahren** zum Betreiben einer Vorrichtung nach einem der vorangegangenen Ansprüche, zur Überführung von entflammbaren, gefährlichen und/oder kryogenen Fluiden in eine oder aus einer mobilen, transportablen oder stationären Speichereinrichtung (1), wobei der zweite Kupplungsteil (4), so mit dem ersten Kupplungsteil (3), in Kontakt gebracht wird, dass sich zuerst die Kontaktflächen (5, 6) berühren um den Ladungsausgleich herzustellen, bevor der Verschlussmechanismus beide Kupplungsteile (3, 4) miteinander verbindet und die Überführung der Fluide beginnt, **dadurch gekennzeichnet, dass** die Verbindungsflächen (5, 6, 7) beider Kupplungsteile durch den Gasstrom, insbesondere durch einen Druckluft-oder Stickstoffstrom, gereinigt werden, bevor eine Berührung der beiden Kupplungsteile (3, 4) stattfindet und/oder der Gasstrom nach Beendigung der Überführung von Fluiden während und nach dem Trennvorgang der Kupplungsteile aktiv ist, so dass auch ein Reinigungseffekt der Kontaktflächen eintritt und gegebenenfalls austretendes zu übertragendes Fluid unmittelbar durch inerte Gase verdünnt wird.

9. **Verfahren** nach Anspruch 8, **dadurch gekennzeichnet, dass** der Gasstrom während und nach dem Trennvorgang der Kupplungsteile (3, 4) aktiv ist

10. **Verfahren** nach einem der Ansprüche 8 oder 9, **dadurch gekennzeichnet, dass** Absperrventile, welche den Austritt von Fluiden aus den getrennten Kupplungsteilen (3, 4) verhindern, erst geöffnet werden können oder automatisch öffnen, wenn der Verschlussmechanismus der Kupplungsteile (3, 4) fest ist und Ladungsausgleich hergestellt ist.

11. **Verfahren** nach einem der Ansprüche 8 bis 10, **dadurch gekennzeichnet, dass** durch eine digitale Datenübertragung zwischen dem zweiten Kupplungsteil (4) und der Speichereinrichtung (1) gewährleistet ist, dass vor dem Start des Übertragungsvorgangs der Ladungsausgleich hergestellt ist und erst dann Absperrventile, welche den Austritt von Fluiden aus den getrennten Kupplungsteilen verhindern, erst geöffnet werden können oder automatisch öffnen.

12. **Verwendung** einer Vorrichtung zur Überführung von entflammbaren, gefährlichen und/oder kryogenen Fluide nach einem der vorhergehenden Ansprüche als Befüllvorrichtung für mobile, transportable oder stationäre Speichereinrichtungen, die mit Wasserstoff, Stickstoff, methanhaltigem Gas, insbesondere Erdgas oder Biogas, oder Sauerstoff befüllt werden.

13. **Zweites Kupplungsteil (4)** für eine Vorrichtung gemäß einem der Ansprüche 1 bis 7 zur Überführung von entflammbaren, gefährlichen und/oder kryogenen Fluiden, wobei das zweite Kupplungsteil (4) die folgenden Merkmale aufweist:
einen Verbindungs- und Verschlussmechanismus zum Herstellen einer Verbindung zum ersten Kupplungsteil (3);
eine Leitungsverbindung (2) für die zu überführenden Fluide, wobei die Leitungsverbindung (2) einen Verbindungsstutzen (7) aufweist, der mit einem Verbindungsstutzen (7) des ersten Kupplungsteils (3) verbindbar ist;
mindestens eine Kontaktfläche (6), die so angeordnet ist, dass die Kontaktfläche (6) mit einer Kontaktfläche (5) des ersten Kupplungsteils derart verbindbar ist, dass ein Ladungsausgleich zwischen den Kupplungsteilen (3, 4) herstellbar ist;
**dadurch gekennzeichnet, dass**
das zweite Kupplungsteil (4) mindestens zwei Leitungsverbindungen (8) aufweist, die mit einer Speichereinrichtung für Gase, insbesondere Druckluft oder Stickstoff, verbindbar sind und jede Leitungsverbindung eine Öffnung in der Nähe des Verbindungsstutzens (7) des zweiten Kupplungsteils (4) aufweist, wobei über die Öffnung ein Gasstrom ausströmen kann, durch den die Verbindungsflächen (5, 6, 7) beider Kupplungsteile (3, 4) gereinigt werden können.

## Claims

1. **Apparatus** for transferring liquid, compressed and/or cryogenic fluids, such as liquefied natural gas (LNG), hydrogen, nitrogen, argon, oxygen, biogas or mixtures of gases, comprising:
a first coupling part (3) and
a second coupling part (4), the second coupling part (4) having a connecting and locking mechanism in order to establish a connection to the first coupling part (3), wherein
the first coupling part (3) comprises a conduit connection (12) for the fluids to be transferred, wherein the conduit connection (12) comprises a connecting piece (7), wherein
the second coupling part (4) comprises a conduit connection (2) for the fluids to be transferred, wherein the conduit connection (2) comprises a connecting piece (7), wherein
wherein the connecting piece (7) of the second coupling part (4) is connectable to the connecting piece (7) of the first coupling part (3), and wherein
the second coupling part (4) comprises at least one contact surface (6) and the the first coupling part (3) comprises a contact surface (5), the contact surfaces being connectable for establishing charge equalisation between the coupling parts (3, 4),
**characterised in that**
the second coupling part (4) additionally comprises two conduit connections (8) connectable to a storage device for gases, particularly compressed air or nitrogen, and that each of the conduit connections (8) comprises an opening near the connecting piece (7) of the second coupling part (4), wherein a gas flow by means of which the contact surfaces (5, 6, 7) of both coupling parts (3, 4) may be cleaned may exit via the openings.

2. **Apparatus** according to claim 1, **characterised in that** at least one contact surface (6), particularly 3 contact surfaces, on the second coupling part (4) is formed so that it protrudes, particularly as a cylinder or hemisphere, and that the first coupling part (3) comprises corresponding recesses.

3. **Apparatus** according to claim 1 or 2, **characterised in that** the conduit connections (8) are connected to the storage device for inert gases, particularly dehumidified compressed air or nitrogen.

4. **Apparatus** according to one of the preceding claims, **characterised in that** the at least one opening of the conduit connections (8) is oriented towards the connecting pieces (7).

5. **Apparatus** according to one of the preceding claims, **characterised in that** the at least one opening of the conduit connections (8) is formed as a nozzle or annular gap.

6. **Apparatus** according to one of the preceding claims, **characterised in that** the second coupling part (4) additionally comprises at least one device (11) for digital data transmission, particularly contactless transmission.

7. **Apparatus** according to claim 6, **characterised in that** a device (10) for digital data transmission connectable to the device (11) for digital data transmission is arranged on the first coupling part (3), on the storage device (1) or near the first coupling part (3).

8. **Method** of operating an apparatus according to one of the preceding claims for transferring flammable, hazardous and/or cryogenic fluids into or out of a mobile, transportable or stationary storage device (1), wherein the second coupling part (4) is brought into contact with the first coupling part (3) so that at first the contact surfaces (5, 6) contact each other in order to establish the charge equalisation before the locking mechanism connects both coupling parts (3, 4) with each other and the transfer of fluids begins,
**characterised in that**
the contact surfaces (5, 6, 7) of both coupling parts are cleaned by the gas flow, particularly by a compressed air or nitrogen flow, before the two coupling parts (3, 4) come into contact with each other and/or the gas flow is active after termination of the transfer of fluids during and after the separation process of the coupling parts so that also a cleaning effect of the contact surfaces occurs and potentially exiting gas to be transferred is diluted by inert gases.

9. **Method** according to claim 8, **characterised in that** the gas flow is active during and after the separation process of the coupling parts (3, 4).

10. **Method** according to one of claims 8 or 9, **characterised in that** cut-off valves, which prevent the emission of fluids from the separated coupling parts (3, 4), can be opened or open automatically only when the locking mechanism of the coupling parts (3, 4) is tight and charge equalisation has been established.

11. **Method** according to one of claims 8 to 10, **characterised in that** digital data transmission between the second coupling part (4) and the storage device (1) ensures the charge equalisation to be established prior to the start of the transfer process and cut-off valves, which prevent the emission of fluids from the separated coupling parts, to be opened or open automatically only thereafter.

12. **Use** of an apparatus for transferring flammable, hazardous and/or cryogenic fluids according to one of the preceding claims as a filling device for mobile, transportable or stationary storage devices to be filled with hydrogen, nitrogen, methane-containing gas, particularly natural gas or biogas, or oxygen.

13. **Second coupling part (4)** for an apparatus according to one of claims 1 to 7 for transferring flammable, hazardous and/or cryogenic fluids, the second coupling part (4) comprising:
a connecting and locking mechanism for establishing a connection to the first coupling part (3);
a conduit connection (2) for the fluids to be transferred, wherein the conduit connection (2) comprises a connecting piece (7) connectable to a connecting piece (7) of the first coupling part (3);
at least one contact surface (6) arranged so that the contact surface (6) is connectable to a contact surface (5) of the first coupling part such that charge equalisation between the coupling parts (3, 4) can be established;
**characterised in that**
the second coupling part (4) comprises at least two conduit connections (8) connectable to a storage device for gases, particularly compressed air or nitrogen, and each conduit connection comprises an opening near the connecting piece (7) of the second coupling part (4), wherein a gas flow by means of which the contact surfaces (5, 6, 7) of both coupling parts (3, 4) may be cleaned may exit via the opening.

## Revendications

1. Dispositif de transfert de fluides liquides, comprimés et/ou cryogéniques, comme le gaz naturel (LNG), l'hydrogène, l'azote, l'argon, l'oxygène, un biogaz ou des mélanges de gaz, comprenant:
une première partie de couplage (3) et
une deuxième partie de couplage (4), dans lequel la deuxième partie de couplage (4) présente un mécanisme d'assemblage et de verrouillage, afin de réaliser un assemblage avec la première partie de couplage (3),
dans lequel la première partie de couplage (3) présente une connexion de conduite (12) pour les fluides à transférer, dans lequel la connexion de conduite (12) présente un embout de connexion (7),
dans lequel la deuxième partie de couplage (4) présente une connexion de conduite (2) pour les fluides à transférer, dans lequel la connexion de conduite (2) présente un embout de connexion (7),
dans lequel l'embout de connexion (7) de la deuxième partie de couplage (4) peut être connecté à l'embout de connexion (7) de la première partie de couplage (3), et
dans lequel la deuxième partie de couplage (4) présente au moins une face de contact (6) et la première partie de couplage (3) présente une face de contact (5), dans lequel les faces de contact peuvent être connectées pour la réalisation d'un équilibre de charge entre les parties de couplage (3, 4), **caractérisé en ce que** la deuxième partie de couplage (4) présente en outre deux connexions de conduite (8), qui peuvent être connectées à un dispositif d'accumulation pour des gaz, en particulier de l'air comprimé ou de l'azote, et **en ce que** chacune des connexions de conduite (8) présente une ouverture à proximité de l'embout de connexion (7) de la deuxième partie de couplage (4), dans lequel un courant de gaz peut s'échapper par les ouvertures, par lequel les faces de connexion (5, 6, 7) des deux parties de couplage (3, 4) peuvent être nettoyées.

2. Dispositif selon la revendication 1, **caractérisé en ce qu'**au moins une face de contact (6), en particulier 3 faces de contact, est configurée sur la deuxième partie de couplage (4), de telle manière qu'elle soit en saillie, en particulier sous forme cylindrique ou hémisphérique, et **en ce que** la première partie de couplage (3) présente des creux correspondants.

3. Dispositif selon la revendication 1 ou 2, **caractérisé en ce que** les connexions de conduite (8) sont en liaison avec un dispositif d'accumulation pour des gaz inertes, en particulier de l'air comprimé séché ou de l'azote.

4. Dispositif selon l'une quelconque des revendications précédentes, **caractérisé en ce que** ladite au moins une ouverture des connexions de conduite (8) est orientée vers l'embout de connexion (7) .

5. Dispositif selon l'une quelconque des revendications précédentes, **caractérisé en ce que** ladite au moins une ouverture des connexions de conduite (8) est réalisée sous la forme d'une buse ou d'une fente annulaire.

6. Dispositif selon l'une quelconque des revendications précédentes, **caractérisé en ce que** la deuxième partie de couplage (4) présente en outre au moins un dispositif pour le transfert numérique de données (11), en particulier pour un transfert sans contact.

7. Dispositif selon l'une quelconque des revendications précédentes, **caractérisé en ce qu'**une unité de transfert de données (10) pouvant être reliée au dispositif pour le transfert numérique de données (11) destinée au transfert numérique des données est installée sur la première partie de couplage (3), sur le dispositif d'accumulation (1) ou à proximité de la première partie de couplage (3).

8. Procédé de conduite d'un dispositif selon l'une quelconque des revendications précédentes, pour le transfert de fluides inflammables, dangereux et/ou cryogéniques dans un ou hors d'un dispositif d'accumulation (1) mobile, transportable ou stationnaire, dans lequel on met en contact la deuxième partie de couplage (4) avec la première partie de couplage (1), de telle manière que les faces de contact (5, 6) se touchent d'abord afin de réaliser l'équilibre de charge, avant que le mécanisme de verrouillage connecte l'une à l'autre les deux parties de couplage (3, 4) et que le transfert de fluide commence, **caractérisé en ce que** l'on nettoie les faces de connexion (5, 6, 7) des deux parties de couplage au moyen du courant de gaz, en particulier au moyen d'un courant d'air comprimé ou d'azote, avant qu'il se produise un contact des deux parties de couplage (3, 4) et/ou le courant de gaz est actif après la fin du transfert de fluides, pendant ou après l'opération de séparation des parties de couplage, de telle manière qu'il se produise aussi un effet de nettoyage des faces de contact et que du fluide à transférer s'échappant éventuellement soit immédiatement dilué par des gaz inertes.

9. Procédé selon la revendication 8, **caractérisé en ce que** le courant de gaz est actif pendant et après l'opération de séparation des parties de couplage (3, 4) .

10. Procédé selon une des revendications 8 ou 9, **caractérisé en ce que** des soupapes d'arrêt, qui empêchent la sortie de fluides hors des parties de couplage séparées (3, 4), peuvent d'abord être ouvertes ou s'ouvrent automatiquement, lorsque le mécanisme de verrouillage des parties de couplage (3, 4) est fixe et que l'équilibre de charge est réalisé.

11. Procédé selon l'une quelconque des revendications 8 à 10, **caractérisé en ce que** l'on garantit, par un transfert de données numérique entre la deuxième partie de couplage (4) et le dispositif d'accumulation (1), que l'équilibre de charge est réalisé avant le démarrage de l'opération de transfert et que c'est seulement alors que des soupapes d'arrêt, qui empêchent la sortie de fluides hors des parties de couplage séparées, peuvent être ouvertes ou s'ouvrent automatiquement.

12. Utilisation d'un dispositif de transfert de fluides inflammables, dangereux et/ou cryogéniques selon l'une quelconque des revendications précédentes comme dispositif de remplissage pour des dispositifs d'accumulation mobiles, transportables ou stationnaires, qui sont remplis d'hydrogène, d'azote, de gaz contenant du méthane, en particulier de gaz naturel ou de biogaz, ou d'oxygène.

13. Deuxième partie de couplage (4) pour un dispositif selon l'une quelconque des revendications 1 à 7 pour le transfert de fluides inflammables, dangereux et/ou cryogéniques, dans laquelle la deuxième partie de couplage (4) présente les caractéristiques suivantes:
un mécanisme d'assemblage et de verrouillage pour la réalisation d'un assemblage avec la première partie de couplage (3);
une connexion de conduite (2) pour les fluides à transférer, dans laquelle la connexion de conduite (2) présente un embout de connexion (7), qui peut être connecté à un embout de connexion (7) de la première partie de couplage (3);
au moins une face de contact (6), qui est disposée de telle manière que la face de contact (6) puisse être connectée à une face de contact (5) de la première partie de couplage (3), de telle manière qu'un équilibre de charge entre les parties de couplage (3, 4) puisse être réalisé,
**caractérisée en ce que** la deuxième partie de couplage (4) présente au moins deux connexions de conduite (8), qui peuvent être connectées à un dispositif d'accumulation pour des gaz, en particulier de l'air comprimé ou de l'azote, et **en ce que** chaque connexion de conduite présente une ouverture à proximité de l'embout de connexion (7) de la deuxième partie de couplage (4), dans laquelle un courant de gaz peut s'échapper par l'ouverture, par lequel les faces de connexion (5, 6, 7) des deux parties de couplage (3, 4) peuvent être nettoyées.
